# EUROPEAN PATENT APPLICATION

(11) **EP 0 807 746 A1**
(43) Date of publication of application: **19.11.1997**
(21) Application number: 97107794.6
(22) Date of filing: 13.05.1997
(51) Int. Cl.: F01L 1/344, F16D 3/10

(54) **Variable valve timing apparatus for internal combustion engine**

(30) Priority: 05.06.1996 JP 142778/96; 14.05.1996 JP 118884/96
(71) Applicant: TOYOTA JIDOSHA KABUSHIKI KAISHA, Aichi-ken (JP)
(72) Inventor: Mikame, Kazuhisa, Toyota-shi, Aichi-ken, (JP); Iida, Tatsuo, Toyota-shi, Aichi-ken, (JP)
(74) Representative: Pellmann, Hans-Bernd, Dipl.-Ing.

(57) **Abstract**

A variable valve timing apparatus for a combustion engine is disclosed. The apparatus includes an air intake valve and an air exhaust valve, a camshaft (11), and a crankshaft. The camshaft is operably coupled to the crankshaft. The camshaft is selectively advanced and retarded between two extreme opposite degrees with respect to the crankshaft to selectively open and close the valves with variable timing based on a running condition of the engine. The apparatus further includes a first rotating body (17) operably coupled to the crankshaft. A second rotating body (19) is operably coupled to the camshaft. A vane (24) is integrally formed with one of the rotating bodies. A cavity (26) is provided with one of the rotating bodies to receive the vane (24). The cavity (26) has an edge (26a) opposite to the vane. A member (28) is provided with the vane (24) abutting against the second edge (26a). A biasing means (29) biases the abutting member (28) to the second edge (26a). A first chamber is defined by the vane in the cavity to receive fluid in the first chamber. The fluid creates pressure to perform relative rotation of the first rotating body (17) and the second rotating body (19). The abutting member (28) slides on the edge (26a) to adjust the amount of advancing or retarding of the camshaft (11) with respect to the crankshaft.

## Description

The present invention relates to a variable valve timing apparatus for altering the valve timing of either one of intake valves or exhaust valves that are provided for engine cylinders. More particularly, the present invention relates to a variable valve timing apparatus that is driven by fluid pressure.

To enhance engine power, the timing for opening and closing either one of intake valves and exhaust valves is altered in accordance with the running condition of the engine. Japanese Unexamined Patent Publication No. 1-92504 describes a typical apparatus for altering the valve timing.

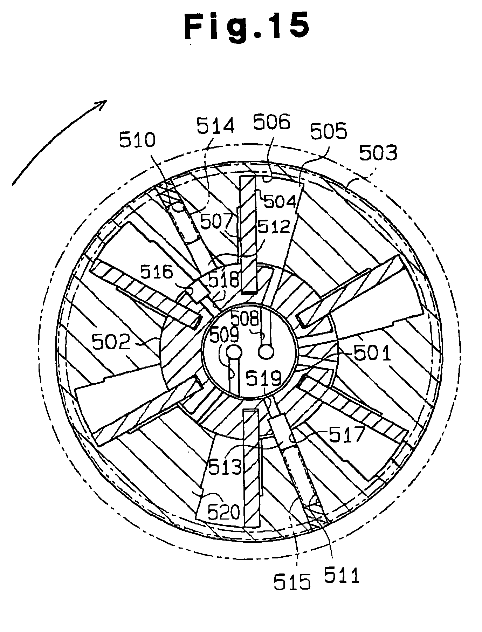

As shown in Fig. 15, the variable valve timing apparatus includes a rotor 502, which is coupled to an end of a camshaft 501, and a timing pulley 503, which rotates relatively to the camshaft 501. The rotating force of an engine crankshaft (not shown) is transmitted to the pulley 503. A plurality of vanes 504 extend radially from the peripheral portion of the rotor 502. A plurality of projections 520 project inward from the inner portion of the pulley 503. A recess 506 is defined between each pair of adjacent projections 520. The vanes 504 are accomodated in the recesses 506.

In each recess 506, a first pressure chamber 505 is defined on one side of the vane 504 while a second pressure chamber 507 is defined on the other side of the vane 504. The pressure chambers 505, 507 are connected to a switching valve (not shown) by way of pressure passages 508, 509. Oil discharged from an oil pump, or the like, is selectively supplied to the pressure passages 508, 509 by the switching valve.

Hydraulic pressure in each pressure cheer 505, 507 acts on the associated vane 504 to rotate the rotor 502 with respect to the pulley 502. This alters the relative rotational phase of the camshaft 501 with respect to the crankshaft and thus varies the valve timing.

The cam (not shown) of the camshaft 501 opens and closes either one of the intake valves or the exhaust valves. A valve spring (not shown) is provided for each valve. The valve spring produces a reaction force when actuating the associated valve. The cam receives the reaction force of the valve spring. The magnitude of the reaction force changes in correspondence with the rotational phase of the camshaft 501. Thus, the torque of the camshaft 501 fluctuates synchronously with changes in the magnitude of the reaction force. The torque fluctuations may oscillation of the rotor 502 that may result in shifts of the valve timing.

To prevent such shifts of the valve timing, two insertion holes 510, 511 extend radially in the pulley 503. Lock pins 512, 513 and springs 514, 515 are retained in the holes 510, 511, respectively. The springs 514, 515 urge the associated lock pins 512, 513 toward the axis of the camshaft 501. Engaging holes 516, 517 are provided in the peripheral portion of the rotor 502. A portion of the lock pin 512 fits into the engaging hole 516 while a portion of the lock pin 513 fits into the engaging hole 517. The engaging holes 516, 517 are connected to the pressure passages 508, 509 by oil holes 518, 519. A portion of the oil that is conveyed to the pressure chambers 506, 507 is supplied to the engaging holes 516, 517. The hydraulic pressure of the oil sent to the engaging holes 516, 517 removes the associated pin 512, 513 therefrom. This separates the pins 512, 513 from the associated holes 516, 517.

When retarding the valve timing, the switching valve sends oil to the pressure chamber 505. In this state, oil is supplied to the engaging hole 516 through the oil hole 518. This separates the lock pin 512 from the engaging hole 516. As a result, the rotor 502 rotates in a direction that is opposite the rotating direction of the pulley 503 (i.e., the retarding direction). The force of the spring 515 then inserts the lock pin 513 into the engaging hole 517. This restricts rotation of the rotor 502 with respect to the pulley 503 and maintains the retarded state of the valve timing.

To advance the valve timing, the switching valve sends oil to the other pressure chamber 507. In this state, oil is supplied to the engaging hole 517 through the oil hole 519. This separates the lock pin 513 from the engaging hole 517. As a result, the rotor 502 rotates in the rotating direction of the pulley 503 (the direction indicated by the arrow). This is the advancing direction. When the engaging hole 516 is aligned with the lock pin 512, the force of the spring 514 urges the pin 512 into the hole 516. This restricts rotation of the rotor 502 with respect to the pulley 503 and maintains the advanced state of the valve timing.

The engagement of the lock pins 512, 513 with the associated engaging holes 516, 517 prevents undesirable displacement of the rotor 502 that may be caused by torque fluctuations This structure allows two predetermined timings to be maintained in a fixed state. Such an apparatus is also described in Japanese Patent Application No. 8-118884, which assignee is the same as this application.

However, in the above structure, the number of lock pins 512, 513 and the number of engaging holes 516, 517 must be the same as the number of the required valve timings. Furthermore, the lock pins 512, 513 and the engaging holes 516, 517 must he arranged in the limited space of the rotor 502 and the pulley 503. In addition, it is required that an passage such as the oil holes 518, 519 be provided for each engaging hole 516, 517 to convey hydraulic pressure and force out the associated lock pin. Consequently, the structure of the apparatus becomes complicated.

Furthermore, to cope with different running conditions of the engine, it is necessary to further increase the number of different valve timings. Such increase allows the engine to run in a satisfactory state. However, this results in a further complicated structure of the apparatus.

To rotate the camshaft 501, the torque applied to the rotor 502 must be sufficient enough to counter the reaction force of the valve springs that is applied to the camshaft 501, the sliding resistance at portions supporting the camshaft 501, and other factors. These forces act in the retarding direction of the rotor 503 and tend to retard the valve timing. Accordingly, the hydraulic pressure necessary for relatively rotating the rotor 502 in the retarding direction to retard the valve timing is small. On the other hand, due to the forces that act in the retarding direction, the hydraulic pressure necessary for relatively rotating the rotor 502 in the advancing direction to advance the valve timing is great.

When advancing the valve timing, the high-pressure oil in the second pressure chamber 507 leaks through the slight gaps that are formed between the peripheral surface of the rotor 502 and the inner surface of the projections 520 of the pulley 503. The oil also leaks into the first pressure chamber 505 through the slight gaps formed between the outer surface of each vane 504 and the walls of the recesses 505. This may cause a pressure decrease in the second pressure chamber 507. As a result, it becomes difficult to rotate the rotor relatively to the pulley 503 at a predetermined speed. This degrades the responsiveness of the apparatus.

Accordingly, it is an objective of the present invention to provide a variable valve timing mechanism having a simple structure.

It is another objective of the present invention to provide a variable timing mechanism having superior responsiveness.

To achieve the above objectives, the present invention provides a variable valve timing apparatus for a combustion engine. The engine includes an air intake valve and an air exhaust valve, a camshaft, and a crankshaft. The camshaft is operably coupled to the crankshaft. The camshaft is selectively advanced and retarded between two extreme opposite degrees with respect to the crankshaft to selectively open and close the valves with variable timing based on a running condition of the engine. The apparatus includes a first rotating body operably coupled to the crankshaft. A second rotating body is operably coupled to the camshaft. A vane is integrally formed with one of the rotating bodies. A cavity is provided with one of the rotating bodies to receive the vane. The cavity has an edge opposite to the vane. A member is provided with the vane abutting against the second edge. A biasing means biases the abutting member to the second edge. A first chamber is defined by the vane in the cavity to receive fluid in the first chamber. The fluid creates pressure to perform relative rotation of the first rotating body and the second rotating body. The abutting member slides on the edge to adjust the amount of advancing or retarding of the camshaft with respect to the crankshaft.

In another aspect of the present invention, an apparatus for variably controlling valve timing in a combustion engine is provided. The engine includes an air intake valve and an air exhaust valve, a camshaft, and a crankshaft. The camshaft is operably coupled to the crankshaft. The camshaft is selectively advanced and retarded between two extreme opposite degrees with respect to the crankshaft to selectively open and close the valves with variable valve timing based on a running condition of the engine. The apparatus includes a first rotating body operably coupled to the crankshaft. A second rotating body operably is coupled to the camshaft. A vane is integrally formed with one of the rotating bodies. A cavity is provided with one of the rotating bodies to receive the vane. The cavity has an edge opposite to the vane. A member is provided with the vane abutting against the second edge. A biasing means biases the abutting member to the second edge. A first chamber is defined by the vane in the cavity to receive fluid in the first chamber. A second chamber is defined adjacent to the first chamber with respect to the vane in the cavity. The second chamber receives the fluid. The camshaft is advanced and retarded with respect to the crankshaft based on differential pressure of the first chamber and the second chamber. The abutting member seals the first chamber and the second chamber to prevent the fluid from leaking from the chambers.

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a cross-sectional view of a first embodiment of a variable valve timing apparatus according to the present invention;
Fig. 1(a) is a cross-sectional view showing a portion of a crankshaft;
Fig. 2 is a cross-sectional view showing camshafts;
Fig. 3 is a cross-sectional view of the sprocket taken along line 3-3 in Fig. 1;
Fig. 4 is a diagrammatic view showing the oil control valve of Fig. 1;
Fig. 5 is a partially enlarged view of Fig. 3;
Fig. 6 is an enlarged cross-sectional view taken along line 6-6 in Fig. 5;
Fig. 7 is a graph illustrating the relationship between the phase shifting amount and the hydraulic pressure;
Fig. 8 is a graph illustrating the relationship between the rotating speed of the impeller and the hydraulic pressure;
Fig. 9 is a cross-sectional view showing a second embodiment of a variable valve timing apparatus according to the present invention;
Fig. 10 is a partially enlarged cross-sectional view showing a comparative example;
Fig. 11 is a partially enlarged cross-sectional view showing a further embodiment;
Fig. 12 is a partially enlarged cross-sectional view showing a further embodiment;
Fig. 13 is a partially enlarged cross-sectional view showing a further embodiment;
Fig. 14 is a plan view showing a further embodiment; and
Fig. 15 is a cross-sectional view showing part of a prior art variable valve timing apparatus.

A first embodiment of a variable valve timing apparatus according to the present invention will hereafter be described with reference to the drawings.

In this embodiment, the variable valve timing apparatus is applied to a camshaft for intake valves of a gasoline engine.

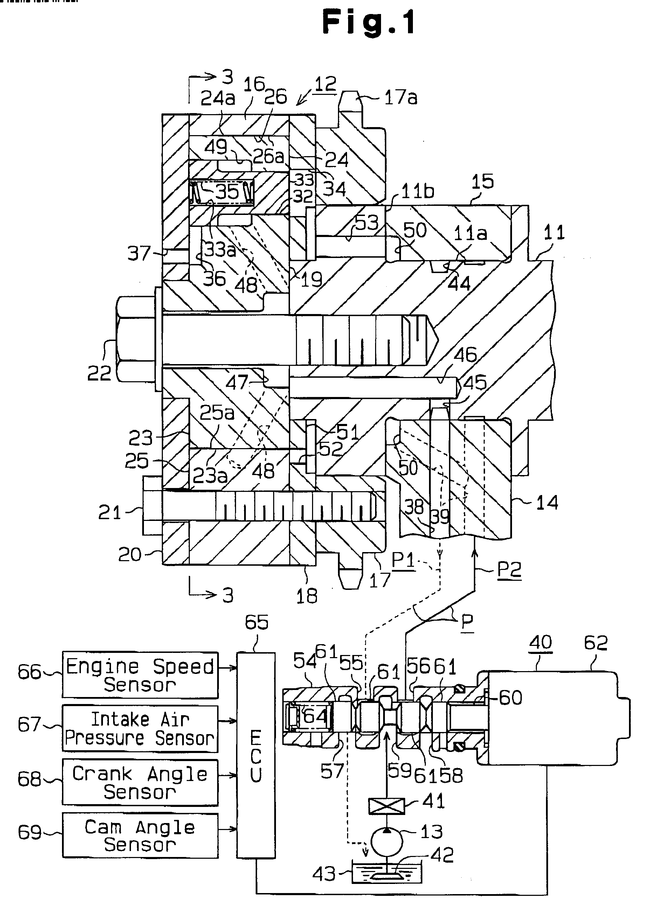

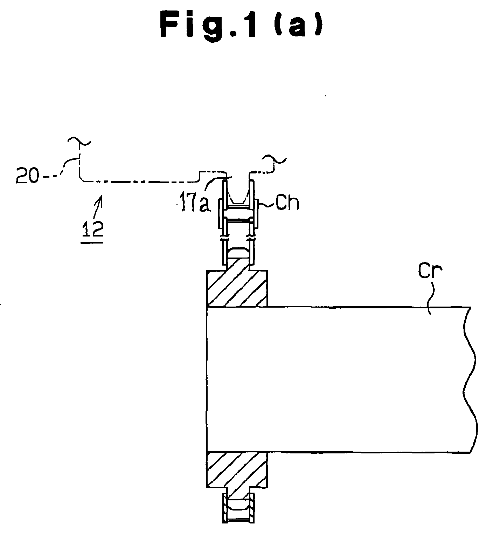

Fig. 1 is a cross-sectional view of a valve train 12 provided at the distal side (left side as viewed in the drawing) of a camshaft 11 for intake valves 102. An oil pump 13, which supplies oil to the valve train 12, and an oil control valve (OCV) 40, which adjusts the hydraulic pressure communicated to the valve train 12, are also shown.

The camshaft 11 has a journal 11a, which is rotatably supported between the top portion of a cylinder head 14 and a bearing cap 15. A large diameter portion 11b is defined at the distal end of the camshaft 11. A sprocket 17 is coupled to the peripheral portion of the large diameter portion 11b. The sprocket 17 rotates relatively to the large diameter portion 11b. Outer teeth 17a project from the peripheral surface of the large diameter portion 11b. As shown in Fig. 1(a), a timing chain Ch is meshed with the outer teeth 17a to transmit the rotating force of a crankshaft Cr to the sprocket 17.

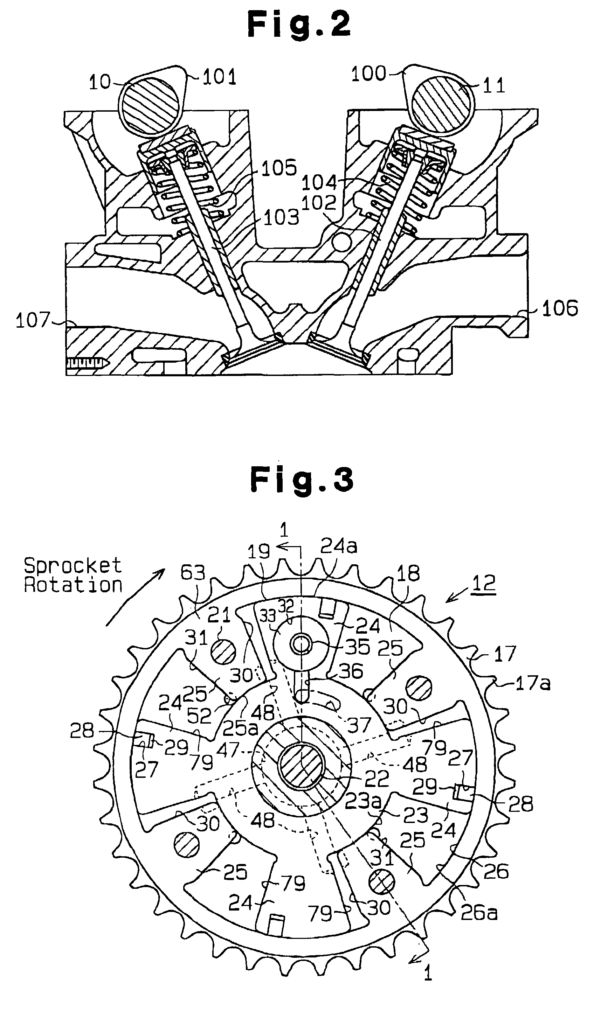

As shown in Fig. 2, a plurality of cams 100 are provided on the basal side of the camshaft 11 for the intake valves 102, In the same manner, a plurality of cams 101 are provided on the basal side of a camshaft 10 for exhaust valves 103. Each cam 100, 101 is in contact with the upper end of the associated valve 102, 103. A valve spring 104, 105 is respectively provided for each valve 102, 103. The valve springs 104, 105 urge the valves 102, 103 in a direction closing suction ports 106, 107. The rotation of the camshafts 11, 10 causes the cams 100, 101 to selectively open and close the associated valves 102, 103.

A bolt 21 fastens a side plate 18, a housing 16, and a cover 20 to the distal side of the sprocket 17. This integrally rotates the side plate 18, the housing 16, and the cover 20 with the sprocket 17. An impeller 19 is coupled to the distal end of the camshaft 11 by a bolt 22. The impeller 19 is fixed to the camshaft 11 so as to rotate integrally with the camshaft 11.

Fig. 3 is a cross-sectional view taken along line 3-3 in Fig. 1 while Fig. 1 is a cross-sectional view taken along line 1-1 in Fig. 3. As shown in the drawing, the impeller 19 includes a cylindrical boss 23 located at the center of impeller 19, four vanes 24 having an angular interval of 90 degrees between one another, and second recesses 79 that are defined between adjacent vanes 24.

The housing 16 includes four equally spaced projections 25, which project radially toward the center of the housing 16. First recesses 26 defined between adjacent projections 25 each accommodate one of the vanes 24. The cylindrical outer surface 24a of each vane 24 is in contact with the cylindrical inner surface 26a of the associated recess 26. The cylindrical inner surface 25a of each projection 25 is in contact with the cylindrical outer surface 23a of the boss 23.

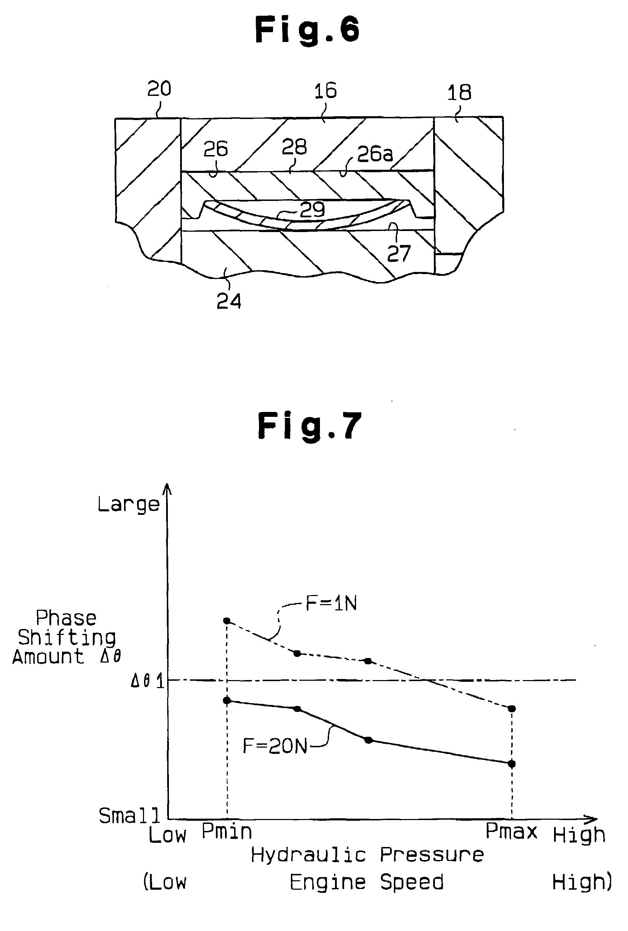

Fig. 5 is an enlarged view showing one of the vanes 24 while Fig. 6 is a cross-sectional view taken along line 6-6 in Fig. 5. As shown in these drawings, a groove 27 is provided in the outer surface 24a of each vane 24. A seal plate 28 is arranged in each groove 27. Each seal plate 28 is in contact with the inner surface 26a of the associated first recess 26. A plate spring 29 is arranged between the seal plate 28 and the walls of each groove 27. Each plate spring 29 urges the seal plate 28 toward the inner surface 26a of the associated first recess 26.

A cover 20 covers the distal side of the housing 16 and the impeller 19. Each vane 24 is accommodated in a space defined between the cover 20, the associated first recess 26, the boss 23, and the side plate 18. Each space is partitioned by the vane 24 into a first pressure chamber 30 and a second pressure chamber 31. The first chamber 30 is defined on the rear side of the vane 24 with respect to the rotating direction of the sprocket 17. In other words, the first chamber 30 is located in the retarding direction of the vane 24. Oil is supplied to the first chamber 30 to advance the valve timing. The second chamber 31 is defined on the front side of the vane 24 with respect to the rotating direction of the sprocket 17. In other words, the second chamber 31 is located in the advancing direction of the vane 24. Oil is supplied to the second chamber 31 to retard the valve timing.

As shown in Fig. 5, the groove 27 is located farther from the first chamber 30 and closer to the second chamber 31 in each vane 24. Accordingly, the length between the first chaser 30 and the seal plate 28 on the outer surface 24a of each vane 24 contacting the inner surface 26a of the associated first recess 26 (contact portion C1) is longer than the length between the second chamber 31 and the seal plate 28 contacting the inner surface 26a of the recess 26 (contact portion).

As shown in Figs. 1 and 3, a through hole 32 extends axially with respect to the camshaft 11 through one of the vanes 24. A lock pin 33 is movably retained in the through hole 32. The lock pin 33 has an accommodating hole 33a. An engaging hole 34 is provided in the side plate 18 at a position corresponding to the lock pin 33. A spring 35 is arranged in the accommodating hole 33a to urge the lock pin 33 into the engaging hole 34. Engagement between the lock pin 33 and the engaging hole 34 fixes the impeller 19 at a position in which the surface of each vane 24 on the first chamber side is slightly separated from the associated projection 25, as shown in Fig. 3. This restricts relative rotation between the impeller 19 and the side plate 18 and rotates the sprocket 17 integrally with the camshaft 11.

An oil groove 36 is provided on the distal surface of the impeller 19. The oil groove 36 connects an elongated hole 37 to the through hole 32. The oil groove 36 and the elongated hole 37 function to externally discharge the air or oil in the through hole 32 at the distal side of the lock pin 33.

Oil is supplied to and discharged from each first and second chamber 30, 31 through a hydraulic pressure passage P.

An advancing oil passage 38 and a retarding oil passage 39 extend through the cylinder head 14. The oil passages 38, 39 are connected to first and second ports 55, 56 of the OCV 40. The OCV 40 is connected to an oil pan 43 by way of an oil filter 41, the pump 13, and an oil strainer 42.

An oil groove 44 extends along the circumference of the journal 11a while an oil hole 45 extends into the camshaft 11. An oil passage 46 extends through the camshaft 11. The advancing oil passage 38 is connected to the oil passage 46 by way of the oil groove 44 and the oil hole 45. The oil passage 46 leads into an annular space 47 defined between the bolt 21, the side plate 18, and, the basal inner surface of the boss 23. As shown in Fig. 3, four oil holes 48 extend radially through the boss 23, the vanes 24, and part of the associated projections 25. The oil holes 48 connect the annular space 47 to each first pressure chamber 30 to supply oil from the annular space 47 to the pressure chamber 30. A hydraulic pressure chamber 49 is defined in the annular space extending between the outer surface of the lock pin 33 and the inner surface of the through hole 32. The hydraulic pressure chamber 49 is connected to annular space 47 by one of the oil holes 48.

The retarding oil passage 39 is connected to an oil groove 50 that extends along the top of the cylinder head 14 and the bearing cap 15. An oil hole 53 extends through the large diameter portion 11b. An annular oil space 51 is defined between the basal surface of the side plate 18 and the distal surface of the large diameter portion 11b. The oil groove 53 connects the oil groove 50 to the oil space 51. Four oil holes 52 extend through the side plate 18 and lead into each recess 26 in the vicinity of the associated projection 25, as shown in Fig. 3. Each oil hole 52 connects the oil space 51 to each second pressure chamber 31 and supplies the oil in the oil space 51 to each chamber 31. The oil space 51 is connected to the engaging hole 34. Thus, the oil in the oil space 51 is also supplied to the engaging hole 34.

A first oil passage P1 for supplying oil to each first pressure chamber 30 is constituted by the advancing oil passage 38, the oil groove 44, the oil hole 45, the oil passage 46, the annular space 47, and the oil holes 48. A second oil passage P2 for supplying oil to each second pressure chamber 31 is constituted by the retarding oil passage 39, the oil groove 50, the oil hole 53, the oil space 51, and the oil holes 52. The first and second oil passages P1, P2 constitute the hydraulic pressure passage P.

As shown in Fig. 1, the OCV 40 includes a casing 54. The casing 54 has first, second, third, fourth, and fifth ports 55, 56, 57, 58, 59. The first port 55 communicates with the advancing oil passage 38. The second port 56 communicates with the retarding oil passage 39. The third and fourth ports 57, 58 are communicated with the oil pan 43 while the fifth port 59 is communicated with the discharge side of the pump 13 via the oil filter 41.

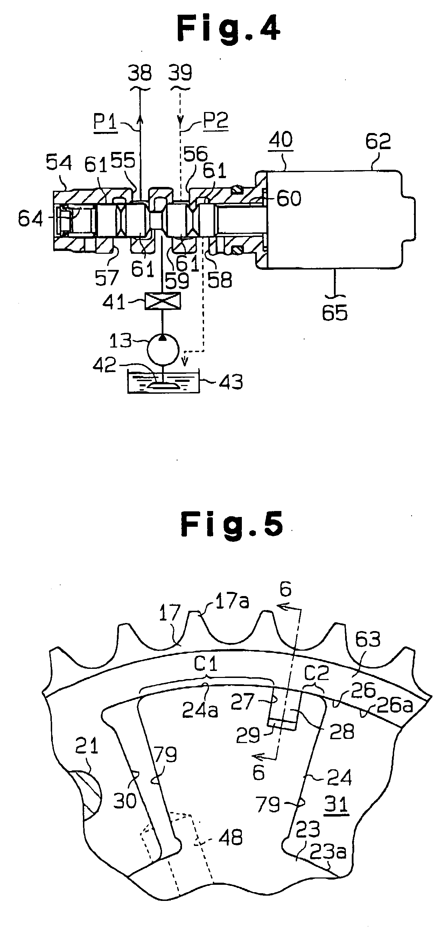

A spool 60 moves reciprocally in the casing 54. The spool 60 includes four cylindrical valve bodies 61. An electromagnetic solenoid 62 moves the spool 60 between a retarding position shown in Fig. 1 and an advancing position shown in Fig. 4. A spring 64 is provided in the casing 54 to urge the spool 64 toward the retarding position.

An electronic control unit (ECU) 65 controls the solenoid 62 through duty signals. The spool 60 is maintained at the advancing position by exciting the solenoid 62 with a 100 percent enablement signal. As shown in Fig. 4, this connects the advancing oil passage 38 to the discharge side of the pump 13 by way of the first and fifth ports 55, 59. The retarding oil passage 39 is connected to the oil pan 43 by way of the second and fourth ports 56, 58. Consequently, oil is supplied to the first chambers 30 through the first oil passage P1 while the oil in the second chambers 31 are returned to the oil pan 43 through the second oil passage P2.

The ECU 65 de-excites the solenoid 62 to maintain the spool 60 at the retarding position. As shown in Fig. 1, this connects the retarding oil passage 39 to the discharge side of the pump 13 by way of the second and fifth ports 56, 59. The advancing oil passage 38 is connected to the oil pan 43 by way of the first and third ports 55, 57. Consequently, oil is supplied to the second chambers 31 through the second oil passage P2 while the oil in the first chambers 30 is returned to the oil pan 43 through the first oil passage P2.

The ECU 65 also excites the solenoid 62 with a 50 percent enablement signal to maintain the spool 60 at a sustaining position. This causes the valve bodies 61 of the spool 60 to close the first and second ports 55, 56. As a result, oil is neither supplied to or discharged from the first and second chambers 30, 31. This sustains the hydraulic pressure of the first and second chambers 30, 31 in the present state.

A speed sensor 66 for detecting the engine speed and a pressure sensor 67 for detecting the intake air pressure are connected to the ECU 65. A crank angle sensor 68 for detecting the rotational phase of the crankshaft Cr and a cam angle sensor 69 for detecting the rotational phase of the camshaft 11 are connected to the ECU 65. Detecting signals are sent to the ECU 65 from the sensors 66-69. Based on these signals, the ECU 65 compares the actual rotational phase of the camshaft 11 with a target rotational phase, which is the optimum phase for the present conditions of the engine. The ECU 65 computes the deviation between the actual rotational phase and the target rotational phase The ECU 65 controls the OCV 40 so that the deviation value is kept smaller than a predetermined value.

When the engine is started, the oil in the oil pan 43 is drawn into the pump 13 and forced into the first oil passage P1. This increases the hydraulic pressure in the hydraulic pressure chamber 49. The hydraulic pressure pushes out the lock pin 33 from the engaging hole 34. This allows relative rotation between the impeller 19 and the sprocket 17. The rotation of the camshaft 11 opens and closes the intake valves 102 by a predetermined timing.

To advance the valve timing of the intake valves 102, the ECU 65 controls the solenoid 62 with a 100 percent enablement signal. This increases the hydraulic pressure in the first pressure chambers 30 and decreases the hydraulic pressure in the second pressure chambers 31. Accordingly, a rotating force oriented in the advancing direction acts on each vane 24. The rotating force rotates the impeller 19 with respect to the sprocket 17 in the advancing direction. This advances the rotational phase of the camshaft 11 with respect to the sprocket 17. As a result, the valve timing of the intake valves 102 is advanced. The valve timing is most advanced when each vane 24 abuts against the associated projection 25 as the impeller 19 rotates with respect to the sprocket 17 in the advancing direction.

To retard the valve timing of the intake valves 102, the ECU 65 stops exciting the solenoid 62. This causes the hydraulic pressure in the second pressure chambers 31 to become higher than the hydraulic pressure in the first pressure chambers 30. Accordingly, a rotating force oriented in the retarding direction acts on each vane 24. The rotating force rotates the impeller 19 with respect to the sprocket 17 in the retarding direction. This retards the rotational phase of the camshaft 11 with respect to the sprocket 17. As a result, the valve timing of the intake valves 102 is advanced. The valve timing is most retarded when each vane 24 abuts against the associated projection 25 as the impeller 19 rotates with respect to the sprocket 17 in the retarding direction.

To sustain the present valve timing of the intake valves 102, the ECU 65 controls the solenoid 62 with a 50 percent enablement signal. This stops the flow of oil into and out of the first and second chambers 30, 31. Accordingly, the rotation of the impeller 19 with respect to the sprocket 17 stops. This sustains the valve timing of the intake valves 102 in the present state.

As described above, the ECU 65 controls the solenoid 62 so that the valve timing of the intake valves 102 may be varied in a continuous manner between the most retarded timing and the most advanced timing. Furthermore, the varied valve timing may be sustained in a steady state.

When the engine is stopped, the hydraulic pressure in the engaging hole 34 and the hydraulic pressure chamber 49 decreases. The decrease in pressure moves the lock pin 33 through the through hole 32 and engages the pin 33 with the engaging hole 34. Accordingly, the rotation of the impeller 19 with respect to the side plate 18 is restricted until the engine is restarted and the pressure in the hydraulic pressure chamber 49 is increased to a predetermined value. Thus, vibrations of the impeller 19 in the rotating direction are suppressed even when a long period of time elapses after stopping the engine or even when oil leaks out of the first and second chambers 30, 31. This prevents noise from being generated by vibrations that cause the vanes 24 to hit the associated projections 25.

If the camshaft 11 is rotated together with the sprocket 17 without any shifts in the valve timing, that is, with the valve timing in a sustained state, forces act on the camshaft 11 in the retarding direction. Such forces include the reaction force of the valve springs 104 and the sliding resistance produced at portions such as between the journal 11a and the cylinder head 14 or between the bearing cap 15 and the camshaft 11. Accordingly, it is necessary to advance the valve timing by rotating the impeller 19 in the advancing direction using the hydraulic pressure of the first chambers 30 against the force acting in the retarding direction. Thus, the pressure of the first chambers 30 used to advance the valve timing must be higher than the pressure of the second chambers 31 used to retard the valve timing. The difference in pressures between the chambers 30, 31 must be sufficient to compensate for the force acting on the impeller 19 in the retarding direction.

Due to the higher pressure in the first chambers 30, oil may leak into the second chambers 31 through the gap between the outer surfaces 24a of the vanes 24 and the associated inner surface 26a of the first recesses 26. However, in this preferred embodiment, each seal plate 28 is located closer to the second chambers 31 than the first chambers 30. Such structure suppresses the leakage of oil from the first chambers 30 to the second chambers 31.

When oil leaks into the second chambers 31 from the first chambers 30, the oil first passes through the slight gap formed between the outer surface 24a of each vane 24 and the inner surface 26a of the associated first recess 26 toward the seal plate 28.

After reaching the seal plate 28, the oil passes through the slight gap between the plate 28 and the inner surface 26a of the associated first recess 26 that results from dimensional assembling margins. The oil further passes through the slight gap between the outer surface 24a of the vane 24 and the inner surface 26a of the associated first recess 26 at the other side of the plate 28. Finally, the oil enters the associated second chamber 31.

The amount of oil that leaks through the seal plate 28 and the inner surface of the associated first recess 26 is substantially proportional to the hydraulic pressure communicated to the location of the seal plate 28 from the first pressure chamber 30. Therefore, in order to decrease the amount of oil that leaks into the second pressure chamber 31, it is necessary to decrease the hydraulic pressure communicated to the location of the plate 28.

As shown in Fig. 5, the contact portion C1 is longer than the contact portion C2. This structure results in friction loss produced at the contact portion C1 between the outer surface 24a of each vane 24 and the inner surface 26a of the associated recess 26 when the oil moves from each first pressure chamber 30 toward the associated seal plate 28. The friction loss sufficiently decreases the hydraulic pressure. This decreases the amount of oil that leaks through the seal plate 28 and the inner surface 26a of the first recess 26 from the first pressure chamber 30 to the second pressure chamber 31 when advancing the valve timing. Thus, the leakage amount is smaller in comparison with a structure in which the length of the contact portions C1, C2 are equal to each other or a structure in which the contact portion C2 is longer than the contact portion C1.

Accordingly, since it is not necessary to decrease the hydraulic pressure in the first pressure chambers 30, the impeller 19 may be rotated in the advancing direction by a predetermined torque. This improves the responsiveness of the variable valve timing apparatus when advancing the valve timing.

To further reduce the amount of oil that leaks into the second pressure chamber 31 from the first pressure chamber 30, the elastic force of the plate spring 29 that presses the seal plate 28 against the inner surface 26a of the associated first recess 26 may be increased. This increases the planar pressure between the plate 28 and the inner surface 26a and improves the sealing ability of the plate 28. However, such a structure results in an increase in the sliding resistance that is produced when rotating the impeller 19 with respect to the housing 16. Even though it may be possible to decrease the amount of oil leakage while improving the responsiveness of the valve timing apparatus when advancing the valve timing, this would degrade the responsiveness when retarding the valve timing. The present invention improves the sealing ability of the seal plates 28 without affecting the responsiveness when retarding the valve timing.

Furthermore, each plate spring 29 presses the associated seal plate 28 against the inner surface 26a of the first recess 26. Thus, there is substantially no decrease in the planar pressure acting between the seal plate 28 and the inner surface 26a even when there is wear of the plate 28. Accordingly, the sealing ability of the seal plates 28 may be maintained over a long period of time. This positively suppresses the amount of oil that leaks out of the first pressure chambers 30.

In addition, oil is supplied to the hydraulic pressure chamber 49, which is defined about the lock pin 33, through one of the oil holes 52 that supply oil to the first pressure chambers 30. In other words, the passage used to communicate hydraulic pressure to the hydraulic pressure chamber 49 is the same as the passage (oil hole 52) used to communicate hydraulic pressure to the first pressure chambers 30. This simplifies the structure of the oil passages in the variable valve timing apparatus and thus reduces production costs.

When the impeller 19 is rotated, the sliding resistance received by the impeller 19 is altered by the pressure acting between each vane 24 and the inner surface 26a of the associated first recess 26. In other words, the sliding resistance is altered by the magnitude of the elastic force F of the plate springs 29. Such sliding resistance may cause oscillations of the impeller 19 when rotated. To positively suppress such oscillations of the impeller 19, it is necessary to adjust the magnitude of the elastic force F to an optimum value. Fig. 7 is a graph showing the result of an experiment. The graph shows the relationship between the phase shifting amount Δθ of the camshaft 11 during oscillation of the impeller 11 and the hydraulic pressure P of the first and second pressure chambers 30, 31.

In Fig. 7, the solid line shows the relationship between the hydraulic pressure P and the phase shifting amount Δθ when the elastic force is set at twenty newton (N). The double-dotted line shows the relationship between the pressure P and the shifting amount Δθ when the elastic force is set at one N. In the experiment, the hydraulic pressure P is varied between a minimum value Pmin and a maximum value Pmax. The minimum and maximum values Pmin, Pmax correspond to the minimum and maximum pressures communicated to the first and second chambers 30, 31 as the engine speed is altered within its speed range. The oil pump 13 is driven by the rotating force of the crankshaft Cr. Thus, the discharge pressure of the oil pump 13 becomes smaller as the engine speed becomes lower. Accordingly, the hydraulic pressure of the pressure chambers 30, 31 is equal to the minimum value Pmin when the engine is idling, that is, when the engine speed is lowest.

The maximum phase shifting amount Δθ tolerated by the camshaft 11 is indicated by the single-dotted line. This predetermined value is referred to as Δθ1. When smaller than the predetermined value Δθ, the influence which the shifting amount Δθ has on the valve timing is small. Thus, the shifting amount Δθ may be ignored when in this range.

As the hydraulic pressure P increases, the hydraulic pressure acting on each vane 24 increases and suppresses oscillations of the impeller 19. Thus, as shown in the solid and double-dotted lines, the shifting amount Δθ decreases as the hydraulic pressure P increases.
Furthermore, the force of the sliding resistance increases as the elastic force F increases. Thus, oscillations of the impeller 37 are suppressed by increasing the elastic force F. This is apparent when comparing the same hydraulic pressure P in Fig. 7. The shifting amount Δθ is smaller when the elastic force F is greater.

From the results of the experiment, it is apparent that the shifting amount Δθ is constantly smaller that the predetermined amount Δθ1 when the elastic force F is set at twenty N. Accordingly, in the preferred embodiment, the elastic force F is set at twenty N. As a result, the shifting amount Δθ of the camshaft 11 remains below the level of tolerance. This positively maintains the valve timing of the intake valves 102 at a predetermined timing.

As mentioned above, the shifting amount Δθ may be decreased to sustain the valve timing by increasing the sliding resistance produced between the seal plate 28 and the inner surface 26a of the associated recess 26. However, the sliding resistance may degrade the responsiveness of the variable valve timing apparatus when changing the valve timing. In other words, the sliding resistance may slow down the rotating speed of the impeller 19 when changing the valve timing.

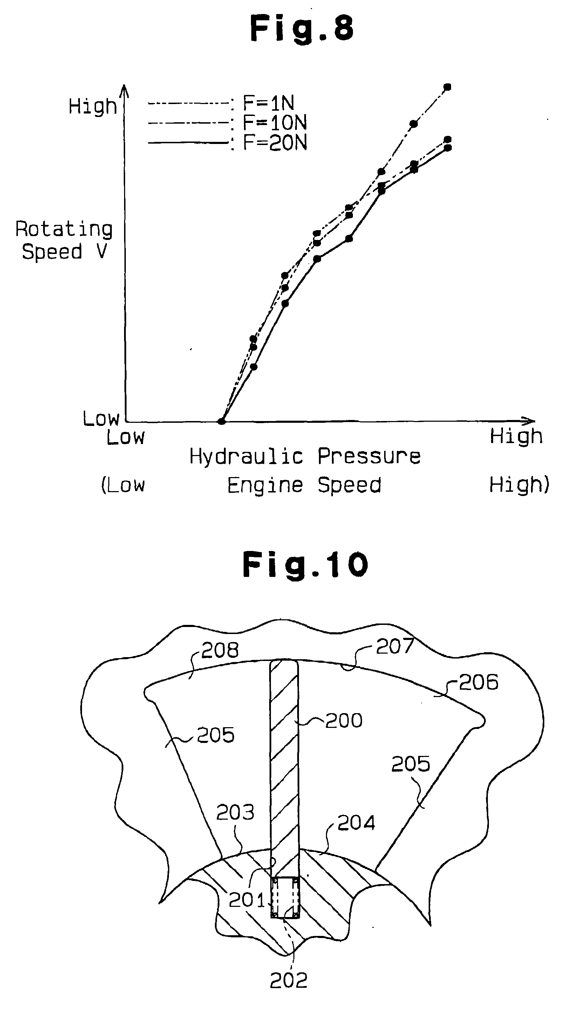

An experiment was conducted to confirm the responsiveness of the variable valve timing apparatus. In the experiment, the impeller 19 was rotated in the advancing direction by supplying oil to the first pressure chambers 30 and discharging oil from the second pressure chambers 31. Fig. 8 shows a graph showing the relationship between the hydraulic pressure P and the rotating speed V of the impeller 19 when rotating the impeller 19. In this graph, the responsiveness of the variable valve timing apparatus may be evaluated by referring to the value of the rotating speed N. In other words, a higher rotating speed V indicates better responsiveness. The graph of Fig. 8 shows the results of the experiment with the elastic force F set at three different values. The solid line represents the elastic force F set at twenty N. The single-dotted line represents the elastic force F set at ten N. The double-dotted line represents the elastic force F set at one N.

It was confirmed through the experiment that the rotating speed V decreases as the elastic force F increases. However, as apparent from the graph, the decreased amount between different elastic forces F is extremely small. For example, the impeller 19 may be rotated at a predetermined speed V even when the elastic force F is set at twenty N. As the pressing force of the seal plate 28 against the inner surface 26a of the associated recess 26 increases, the sealing ability of the seal plate 28 increases. This enhances the pressure-tight state of the pressure chambers 30, 31. In other words, an enhancement in the pressure-tight state of the pressure chambers 30, 31 decreases the amount of oil leakage. This results in an increase in the rotating speed V. The increase in the rotating speed V caused by the decrease in the amount of oil leakage offsets the decrease in the rotating speed V caused by the increase in the sliding resistance. As a result, this suppresses a decrease in the rotating speed V.

The enhancement of the pressure-tight state of the pressure chambers 30, 31 decreases the amount of oil leakage. This keeps the offset amount of the valve timing of the intake valves 102 (phase shifting amount Δθ) below the level of tolerance while also substantially preventing degradation of the responsiveness of the variable valve timing apparatus. Brass, which is a soft metal, is used as the material of the seal plate 28. This improves the adhering characteristic of the plate 28 and further improves the pressure-tight state of the pressure chambers 30, 31.

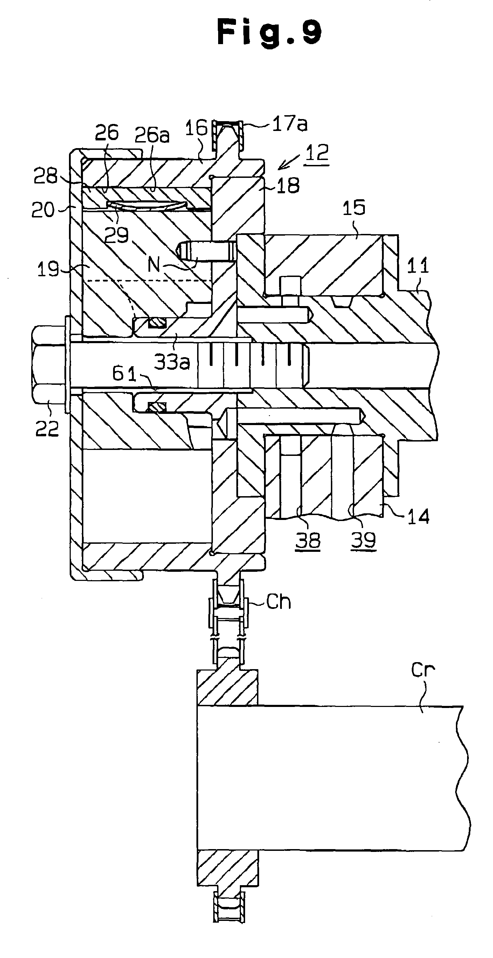

Fig. 9 shows a second embodiment of a variable valve timing apparatus according to the present invention.

In the second embodiment, the impeller 19 and the side plate 18 differ from the first embodiment. More specifically, the through hole 32 that extends through one of the vanes 19, the engaging hole 34 of the side plate 18, and the lock pin 33 that is inserted through the through hole 32 and the engaging hole 34 are deleted in this embodiment. The side plate 18 is fixed to the impeller 19 by a knock pin N. Thus, the impeller 19 rotates integrally with the camshaft 11. The seal plate 28 is pressed against inner surface 26a of the recess 26 by the plate spring 29. The seal plate 28 produces a sliding resistance for controlling the valve timing.

In the first embodiment, the hydraulic pressure produced by the OCV 40 separates the lock pin 33 from the engaging hole 34 to allow relative rotation between the impeller 19 and the side plate 18. However, in this embodiment, the rotational phase of the impeller 19 is not locked mechanically. During operation of the engine, the phase of the impeller 19 is controlled by the pressures in the pressure chambers 30, 31 and the sliding resistance of the seal plates 28. The seal plates 20 prevent oscillation of the impeller 28.

More specifically, in the first embodiment, lock pins 33 are fit into engaging holes 34 to sustain the valve timing. However, the structure of the second embodiment does not require the plurality of lock pins 33 and engaging holes 34. This simplifies the structure of the apparatus. More particularly, in the first embodiment, to sustain the valve timing of the intake valves 102 at different timings, the number of lock pins and engaging holes must be the same as the number of the different timings. However, in the second embodiment, the valve timing is sustained by the sliding resistance. Thus, the valve timing may be sustained at arbitrary timings without changing the number of the seal plates 28 and the plate springs 29 in accordance with the number of different timings.

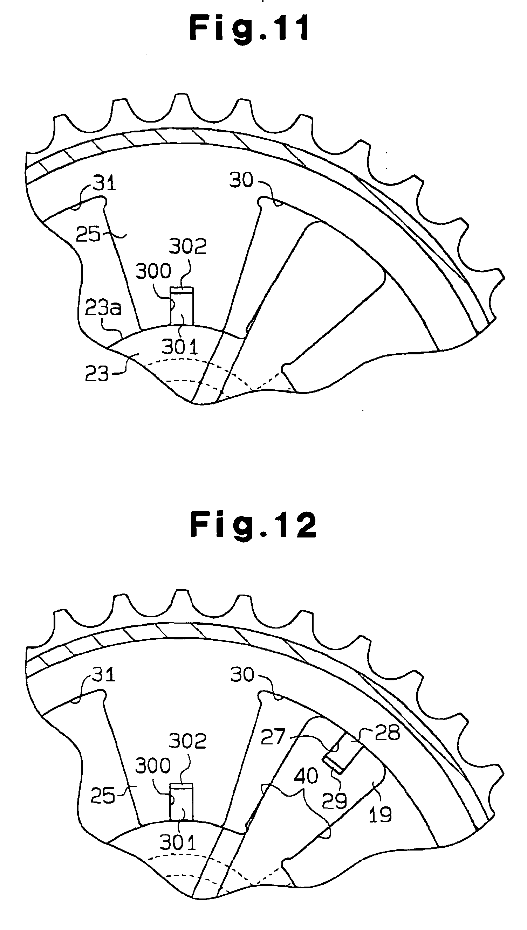

The structure of the first and second embodiments will now be compared with the structure shown in Fig 10 to emphasize the advantages of the second embodiment.

In the comparative example, an impeller 203 includes four plate-like vanes 200 and a boss 204. Only one vane 200 is shown in the drawing. A groove 201 is provided in the boss 204 for each vane 200. The groove 201 receives the vane 200 and supports the vane 200 in a manner allowing radial movement. A spring 202 is arranged in each groove 201 to urge the vane 200 in a radial direction of the boss 204. This presses each vane 200 against an inner surface of an associated recess 207. The pressing force acting between the vane 200 and the inner surface of the associated recess 207 is equal to the elastic force of the spring 202.

This structure uses the sliding resistance produced between the vanes 200 and the inner surface of the associated recess 207 to suppress oscillations of the vanes 203 caused by torque fluctuations of the camshaft 11.

However, the phase shifting amount Δθ must be lower than a level of tolerance to prevent oscillations. The shifting amount Δθ becomes greater as the hydraulic pressure P in pressure chambers 206, 208 become smaller (refer to Fig. 7). Thus, the elastic force of the spring 202 must be set so that the shifting amount Δθ corresponding to the minimum value of the hydraulic pressure P becomes smaller than the predetermined value Δθ1. This suppresses the shifting amount Δθ below the level of tolerance even when the hydraulic pressure is low during idling of the engine.

As the engine speed increases, the centrifugal force acting on each vane 200 increases. In this comparative example, the vanes 200 are movable in the radial direction of the boss 204. This causes the centrifugal force to add to the pressing force of the springs 202. As a result, the sliding resistance produced between each vane 200 and the inner surface of the associated recess 207 becomes unnecessarily high. As mentioned above, the increase in the pressing force decreases the amount of oil leakage between the pressure chambers 206, 208. This increases the rotating speed V and suppresses degradation of the responsiveness of the variable valve timing apparatus. However, it is difficult to expect an enhancement in the responsiveness of the variable valve timing apparatus when further increasing the pressing force between the vanes 200 and the associated recess 207 from a state in which the amount of oil leakage between the pressure chambers 206, 208 has become small.

Thus, the structure of the comparative example may cause the sliding resistance between the vanes 300 and the inner surfaces of the associated recesses 207 to become excessively large when the engine speed becomes high. To cope with the increase in the sliding resistance caused by the centrifugal force, the elastic force of the spring 202 may be set at a smaller value. However, in this case, the oscillations of the impeller 203 is not suppressed since the sliding resistance becomes insufficient when the hydraulic pressure P becomes small as the engine speed decreases. Thus, fluctuations in the valve timing may not be suppressed.

In lieu of the springs 202, oil may be supplied to the grooves 201 from the oil pump 103. The hydraulic pressure of the oil may be used to urge the vanes 200 in the radial direction of the boss 204. However, the sliding resistance becomes insufficient when the engine speed is low and becomes excessive when the engine speed is high.

Furthermore, when a sliding resistance acts on the distal end of each vane 200, moment acts on the associated groove 201. The moment may damage the side walls of the groove 201. This may degrade the durability of the impeller 203 which in turn may degrade the durability and reliability of the variable valve timing apparatus.

The first and second embodiment differ from the comparative example in that the boss 23 and the vanes 24 are formed integrally. Thus, when the engine speed becomes high, the vanes 24 are not moved outward to increase the sliding resistance. In the first and second embodiments, centrifugal force acts on the seal plates 28 in the same manner as the comparative example The sliding resistance alters in accordance with the centrifugal force. However, the moment of inertia acting about the axis of the impeller 19 is extremely small in comparison with the moment acting on the vanes 200 of the comparative example. Accordingly, the centrifugal force acting on the seal plates 28 is small and the fluctuation in the sliding resistance caused by changes in the engine speed is substantially eliminated. As a result, the responsiveness of the variable valve timing apparatus in the first and second embodiments is not degraded as in the variable valve timing apparatus of the comparative example. In addition, the first and second embodiments do not include the grooves 201. Thus, there is no degradation in the durability and reliability of the variable valve timing apparatus that may result from damages of the grooves 202.

Accordingly, the variable valve timing apparatus of the first and second embodiments are superior to that of the comparative example. The advantages described below may also be obtained through the structure of the first and second embodiments.

The temperature of the oil supplied to the first and second pressure chambers 30, 31 increases when the engine starts running. The oil heats the components of the variable valve timing apparatus such as the seal plates 28 and the plate springs 29. The heat may cause deterioration of the seal plates 28 and the plate springs 29. This may change the sliding resistance produced between each seal plate 28 and the inner surface 26a of the associated recess 26.

However, the seal plates 28 are made of brass while the plate springs 29 are made of stainless steel. Therefore, deterioration caused by heat or wear is small in comparison with when the seal plates 28 and the plate springs 29 are made of a rubber material. Accordingly, the second embodiment suppresses changes in the sliding resistance that may be caused by deterioration. Thus, the desired valve timing may be positively sustained over a long period of time.

Although only two embodiments of the present invention has been described herein, it should be apparent to those skilled in the art that the present invention may be embodied in many other specific forms without departing from the spirit or scope of the invention. More particularly, the present invention may be modified as described below.

In the preferred and illustrated embodiments, the seal plates 28 are arranged in the grooves 27 provided in the outer surface of each vane 19. However, as shown in Fig. 11, a groove 300 may be provided in the surface of each projection 25 (only one groove 300 is shown in the drawing). A seal plate 301 and a plate spring 302 is arranged in each groove 300. The plate spring 302 presses the seal plate 301 against the outer surface 23a of the boss 23. The advantages obtained through this structure is the same as that obtained through the preferred embodiments.

As shown in Fig. 12, the structure of the above embodiments may be combined. In other words, the grooves 27, 300 may be provided on the inner surface of the projections 25 and the outer surface of the vanes 19, respectively. The seal plates 28, 301 and the plate springs 29, 301 are arranged in the grooves 27, 300 respectively. This structure decreases the amount of oil leakage between the first and second pressure chambers 30, 31 and further improves the responsiveness of the variable valve timing apparatus. Furthermore, the sliding resistance produced by each seal plate 28, 301 may be decreased without changing the sum of the sliding resistance of every seal plate 28, 301 that acts on the impeller 19. This prevents damages that may be caused by wear of the seal plates 28, 301.

The seal plate 28 and the plate spring 29 may be provided in only one of the vanes 19. In such a structure, the elastic force of the plate spring 29 is increased so that the sliding resistance, which acts on the impeller 19, is sufficient for sustaining the valve timing.

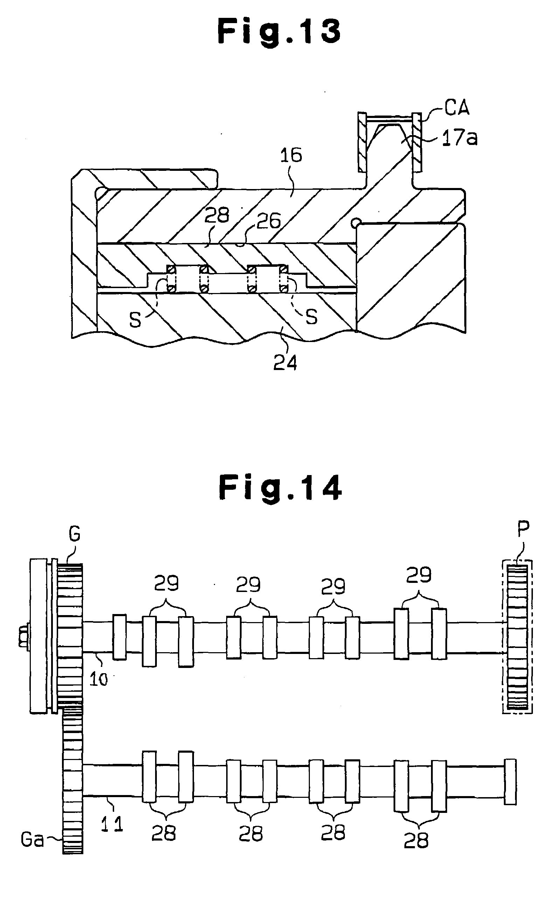

The plate spring 28 that urges the seal plate 28 may be exchanged with other elastic members. For example, as shown in Fig. 13, a pair of coil springs S may be arranged between the seal plate 28 and the surface of the associated recess 26. The springs S urge the seal plate 28 toward the surface of the associated recess 26. The advantages of the preferred and illustrated embodiments may also be obtained through this structure.

An elastic member such as a rubber material may be used in lieu of the plate spring 29.

As shown in Fig. 14, the variable valve timing apparatus may be provided on one end of the exhaust valve side camshaft 10. A pulley P wound about the other end of the camshaft 10 transmits the rotation force of the crankshaft Cr to the variable valve timing apparatus. A drive gear G of the apparatus transmits the rotating force to the intake valve side camshaft 11 by way of the driven gear Ga. The rotation of the camshaft 11 causes cams, which are provided on the camshaft 11, to selectively open and close the intake valves 102 (not shown). The variable valve timing apparatus alters the relative rotational phase between the impeller 19 and the drive gear G. This alters the rotational phase of the camshaft 11 and varies the valve timing of the intake valves 102. The advantages of the preferred and illustrated embodiments may also be obtained through this structure.

The impeller 19 of the preferred and illustrated embodiments is provided with four vanes 19. However, the number of vanes 19 is not limited. Thus, more or less vanes 19 may be provided. However, in such cases, the vanes 19 must be balanced. Thus, it is preferable that the vanes 19 be arranged in a symmetrical manner with respect to the axis of the camshaft 11 and that the vanes 19 be spaced equally.

Each of the above embodiments provides a structure for varying the valve timing of the intake valves 102. However, the variable valve timing apparatus may be provided on the exhaust valve side camshaft 11a to vary the valve timing of the exhaust valves 103. As another option, the variable valve timing apparatus, may be provided on both camshafts 11, 11a to alter the valve timing of the associated intake valves 102 and exhaust valves 103.

Therefore, the present examples and embodiments are to be considered as illustrative and not restrictive and the invention is not to be limited to the details given herein, but may be modified within the scope of the appended claims.

A variable valve timing apparatus for a combustion engine is disclosed. The apparatus includes an air intake valve and an air exhaust valve, a camshaft, and a crankshaft. The camshaft is operably coupled to the crankshaft. The camshaft is selectively advanced and retarded between two extreme opposite degrees with respect to the crankshaft to selectively open and close the valves with variable timing based on a running condition of the engine. The apparatus further includes a first rotating body operably coupled to the crankshaft. A second rotating body is operably coupled to the camshaft. A vane is integrally formed with one of the rotating bodies. A cavity is provided with one of the rotating bodies to receive the vane. The cavity has an edge opposite to the vane. A member is provided with the vane abutting against the second edge. A biasing means biases the abutting member to the second edge. A first chamber is defined by the vane in the cavity to receive fluid in the first chamber. The fluid creates pressure to perform relative rotation of the first rotating body and the second rotating body. The abutting member slides on the edge to adjust the amount of advancing or retarding of the camshaft with respect to the crankshaft.

## Claims

1. A variable valve timing apparatus for a combustion engine including an air intake valve and an air exhaust valve, a camshaft and a crankshaft, wherein said camshaft is operably coupled to the crankshaft, and wherein said camshaft is selectively advanced and retarded between two extreme opposite degrees with respect to the crankshaft to selectively open and close said valves with variable timing based on a running condition of said engine, said apparatus comprising:
a first rotating body operably coupled to the crankshaft;
a second rotating body operably coupled to the camshaft;
a vane integrally formed with one of the rotating bodies;
a cavity provided with one of the rotating bodies to receive the vane, said cavity having an edge opposite to the vane;
a member provided with the vane abutting against the second edge;
means for biasing the abutting member to the second edge; and
a first chamber defined by the vane in the cavity to receive fluid in the first chamber, said fluid creating pressure to perform relative rotation of said first rotating body and said second rotating body, wherein said abutting member slides on the edge to adjust the amount of advancing or retarding of the camshaft with respect to the crankshaft.

2. The apparatus as set forth in Claim 1 further comprising a second chamber defined adjacent to the first chamber with respect to the vane in the cavity, wherein said second chamber receives the fluid, and wherein said camshaft is advanced and retarded with respect to the crankshaft based on differential pressure of the first chamber and the second chamber.

3. The apparatus as set forth in Claim 2, wherein said pressure in the first chamber advances the camshaft with respect to the crankshaft, and wherein said pressure in the second chamber retards the camshaft with respect to the crankshaft.

4. The apparatus as set forth in Claim 3 further comprising:
means for supplying the fluid to the first chamber and the second chamber selectively; and
means for actuating said supplying means to adjust amount of the fluid that is supplied to the chamber.

5. The apparatus as set forth in Claim 4 further comprising:
said supplying means includes means for discharging the fluid from the first chamber and the second chamber selectively; and
said actuating means includes means for switching the supply and the discharge of the fluid in said chambers, wherein the supply and discharge of the fluid in one of the chambers are contrary carried out to those in the other one of the chambers.

6. The apparatus as set forth in Claim 5, wherein said actuating means controls the supplying means to withhold the discharge and the supply of the fluid in both chambers to maintain current valve timing.

7. The apparatus as set forth in Claim 2, wherein said abutting member seals the first chamber and the second chamber to prevent the fluid from leaking from the chambers.

8. The apparatus as set forth in Claim 7, wherein said abutting means is disposed closer to one of the first chamber than to the second chamber.

9. The apparatus as set forth in Claim 6, wherein said actuating means includes an electric control unit outputting a duty signal and wherein said supplying means includes an electromagnetic valve connected to the first chamber and the second chamber and actuated based on the duty signal.

10. The apparatus as set forth in Claim 9, wherein said electric control unit outputs a specific duty signal with an enablement and an disenablement equal to each other, wherein said electromagnetic valve allows equal amount of the fluid to pass to the chambers based on the specific duty signal.

11. An apparatus for variably controlling valve timing in a combustion engine including an air intake valve and an air exhaust valve, a camshaft and a crankshaft, wherein said camshaft is operably coupled to the crankshaft, and wherein said camshaft is selectively advanced and retarded between two extreme opposite degrees with respect to the crankshaft to selectively open and close said valves with variable valve timing based on a running condition of said engine, said apparatus comprising:
a first rotating body operably coupled to the crankshaft;
a second rotating body operably coupled to the camshaft;
a vane integrally formed with one of the rotating bodies;
a cavity provided with one of the rotating bodies to receive the vane, said cavity having an edge opposite to the vane;
a member provided with the vane abutting against the second edge;
means for biasing the abutting member to the second edge;
a first chamber defined by the vane in the cavity to receive fluid in the first chamber;
a second chamber defined adjacent to the first chamber with respect to the vane in the cavity, wherein said second chamber receives the fluid, and wherein said camshaft is advanced and retarded with respect to the crankshaft based on differential pressure of the first chamber and the second chamber; and
said abutting member sealing the first chamber and the second chamber to prevent the fluid from leaking from the chambers.

12. The apparatus as set forth in Claim 11, wherein said abutting means is disposed closer to one of the first chamber than to the second chamber

13. The apparatus as set forth in claim 12 further comprising:
means for supplying the fluid to the first chamber and the second chamber selectively; and
means for actuating said supplying means to adjust amount of the fluid that is supplied to the chamber.

14. The apparatus as set forth in Claim 15 further comprising:
said supplying means includes means for discharging the fluid from the first chamber and the second chamber selectively; and
said actuating means includes means for switching the supply and the discharge of the fluid in said chambers, wherein the supply and discharge of the fluid in one of the chambers are contrary carried out to those in the other one of the chambers.

15. The apparatus as set forth in Claim 14, wherein said actuating means controls the supplying means to withhold the discharge and the supply of the fluid in both chambers to maintain current valve timing.

16. The apparatus as set forth in Claim 15, wherein said actuating means includes an electric control unit outputting a duty signal and wherein said supplying means includes an electromagnetic valve connected to the first chamber and the second chamber and actuated based on the duty signal.

17. The apparatus as set forth in Claim 16, wherein said electric control unit outputs a specific duty signal with an enablement and an disenablement equal to each other, wherein said electromagnetic valve allows equal amount of the fluid to pass to the chambers based on the specific duty signal.
